# EUROPÄISCHE PATENTANMELDUNG

(11) **EP 0 933 255 A2**
(43) Veröffentlichungstag der Anmeldung: **04.08.1999**
(21) Anmeldenummer: 98123964.3
(22) Anmeldetag: 17.12.1998
(51) Int. Cl.: B60Q 1/26

(54) **Beleuchtungseinrichtung für Kraftfahrzeuge**

(30) Priorität: 29.01.1998 DE 19803399
(71) Anmelder: Volkswagen Aktiengesellschaft, 38436 Wolfsburg (DE)
(72) Erfinder: Wilde, Ralf, 38444 Wolfsburg (DE)

(57) **Zusammenfassung**

Die Erfindung betrifft eine Beleuchtungseinrichtung (1) für Kraftfahrzeuge zur Anordnung innerhalb einer eine Öffnung aufweisenden Karosserie oder dergleichen, umfassend ein mindestens eine Leuchte (4) aufnehmendes Trägerteil (2), wobei das Trägerteil (2) mit Befestigungsmitteln (5) ausgebildet ist, mittels derer das Trägerteil (2) an einem inneren Karosserieteil (6) oder dergleichen befestigbar ist, und eine transparente Lichtscheibe (3), mittels derer die Öffnung (10) der Karosserie dichtend abschließbar ist, wobei das Trägerteil (2) und die Lichtscheibe (3) als separate Bauteile ausgebildet sind, die weder direkt noch über ein Verbindungsstück im eingebauten Zustand miteinander verbunden sind.

## Beschreibung

Die Erfindung betrifft eine Beleuchtungseinrichtung für Kraftfahrzeuge gemäß dem Oberbegriff des Patentanspruchs 1.

Eine solche Beleuchtungseinrichtung ist beispielsweise aus der DE 30 30 427 bekannt, wo an der Karosserie ein Frontteil aus Kunststoff befestigt ist, das mithin teilweise die Frontpartie des Kraftfahrzeuges bildet. Im Frontteil ist eine Stoßstange einstückig angeformt und jeweils zwei Hauptscheinwerfer, Blinkleuchten und Zusatzscheinwerfer sind mittels Rastverbindungen am Frontteil befestigt. Eine transparente Lichtscheibe mit optisch wirksamen Mitteln und teilweise farbigen Bereichen deckt die Beleuchtungseinrichtung von außen ab. Die Lichtscheibe weist dazu Federhaken und Ansätze auf, die in korrespondierende Gegenstücke des Trägerteils eingreifen.

Aus der EP 0 243 241 ist eine Anordnung eines optischen Blocks auf einem Kraftfahrzeug-Karosserieblech mit einer die Anordnung aufnehmenden Öffnung bekannt, wobei zwischen dem Umfang des Blocks und dem angrenzenden Teil des Bleches eine Dichtung eingesetzt ist, wobei der optische Block ein mindestens eine Leuchte enthaltendes Gehäuse mit einer offenen Seite besitzt, die durch eine transparente Streuscheibe abgedeckt ist und Einrichtungen zur Befestigung des Blocks an dem Blech vorgesehen sind, wobei die Dichtung die Einrichtung zur Befestigung des optischen Blocks an dem Blech bildet und eine Außennut, die einen Rand des die Öffnung abgrenzenden Blechs aufnimmt und mindestens eine Innennut besitzt, die mindestens einen ersten Flansch aufnimmt, der aus dem umgebogenen Umfangsrand des Gehäuses, der dessen offene Seite abgrenzt, besteht.

Nachteilig an allen bekannten Beleuchtungseinrichtungen ist, daß das Trägerteil mit der verbundenen Lichtscheibe zur Kantenöffnung justiert werden muß, so daß aufgrund der unvermeidlichen Fertigungstoleranzen der Spalt zwischen der Lichtscheibe und der Karosserie durch eine Dichtung wasserdicht verschlossen werden kann, wobei auf die Dichtung aufgrund der auszugleichenden Toleranzen sehr große Drücke ausgeübt werden können, die die Funktionalität der Dichtung beeinflussen. Des weiteren benötigt die Justierung des Trägerteils verhältnismäßig viel Zeit.

Der Erfindung liegt daher das technische Problem zugrunde, eine Beleuchtungseinrichtung für Kraftfahrzeuge zu schaffen, deren Befestigung, Ausrichtung und Abdichtung zur Karosserie vereinfacht ist.

Die Lösung des technischen Problems ergibt sich durch die Merkmale des Patentanspruchs 1. Durch die Ausbildung des Trägerteils und der Lichtscheibe als separate Bestandteile, die völlig voneinander getrennt an der Karosserie befestigt werden, ist eine einfache Montage möglich, da die Ausrichtung vom Trägerteil zur Lichtscheibe weniger kritisch ist als die Justierung des Trägerteils zum Innenbereich der Karosserie beziehungsweise der Lichtscheibe zur Öffnung in der Karosserie. Da weiter die Lichtscheibe materialbedingt verformungsfähiger als das Trägerteil ist, ist der Druck auf die Dichtung nicht so ausgeprägt und besser kontrollierbar, so daß ein zu starkes Quetschen der Dichtung vermieden wird. Ein weiterer Vorteil ist, daß die Geometrie von Lichtscheibe und Trägerteil voneinander unabhängig sind, so daß einerseits zu einem Trägerteil verschiedene Lichtscheiben verwendbar sind und andererseits unabhängig vom Trägerteil beziehungsweise Leuchte die Lichtscheibe optimal an die Karosserie angepaßt werden kann. Weitere vorteilhafte Ausgestaltungen der Erfindung ergeben sich aus den Unteransprüchen.

In einer weiteren bevorzugten Ausführungsform werden sowohl Trägerteil als auch Lichtscheibe an der Karosserie durch eine Rastverbindung befestigt, wodurch die Fertigungszeiten erheblich reduzierbar sind. Mittels einer separaten Umlenkoptik, die in Abstrahlrichtung der Leuchte angeordnet ist, kann das Trägerteil örtlich unabhängig von der Öffnung in der Karosserie und der Lichtscheibe angeordnet werden, was einen höheren Freiheitsgrad in der Fertigung bedeutet. Besonders vorteilhaft kann die Lichtscheibe in einem Kunststoffstoßfänger aus EPDM angeordnet werden, da dieser bezüglich Verformbarkeit sehr gut an die Materialeigenschaften der Lichtscheibe angepaßt ist.

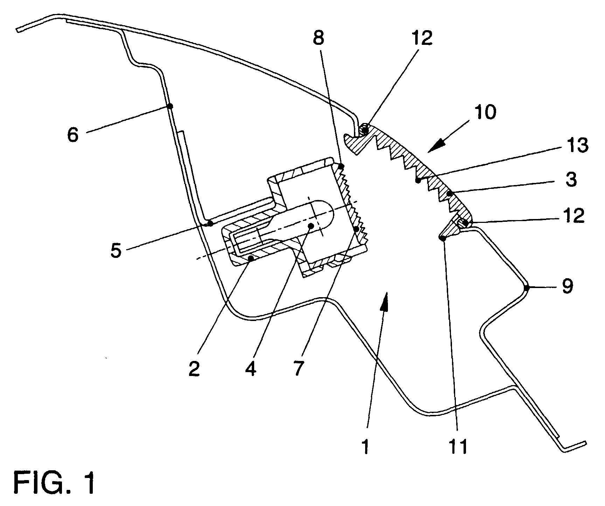

Die Erfindung wird nachfolgend anhand eines bevorzugten Ausführungsbeispieles näher erläutert. Die einzige Figur zeigt einen Querschnitt durch eine Beleuchtungseinrichtung für Kraftfahrzeuge.

Die Beleuchtungseinrichtung 1 umfaßt ein Trägerteil 2 und eine Lichtscheibe 3. Das Trägerteil 2 beinhaltet mindestens eine Leuchte 4, die im Trägerteil 2 elektrisch kontaktiert ist. Des weiteren ist am Trägerteil 2 ein Befestigungsmittel 5 angeordnet, mittels dessen das Trägerteil 2 lösbar an einem ersten, inneren Karosserieteil 6 befestigbar ist. Das L-förmige Befestigungsmittel 5 wird dabei vorzugsweise mittels einer Rastverbindung mit dem Karosserieteil 6 verbunden. In Abstrahlrichtung der Leuchte 4 ist auf dem Trägerteil 2 lösbar eine zweite Lichtscheibe 7 mit einer lichtstreuenden Fresnel-Optik 8 angeordnet. An dem ersten, inneren Karosserieteil 6 ist ein zweites, äußeres Karosserieteil 9 mit einer Öffnung 10 befestigt, wobei das Karosserieteil 9 beispielsweise auch ein Stoßfänger sein kann, so daß der gewählte Begriff Karosserieteil nicht beschränkend auf die klassische Karosserie zu verstehen ist. In der Öffnung 10 ist die Lichtscheibe 3 mittels Rastnasen 11, die mindestens teilweise hinter das Karosserieteil 9 greifen, eingerastet. Zwischen der Lichtscheibe 3 und dem Karosserieteil 9 ist ein Dichtungsgummi 12 angeordnet, der die Öffnung 10 im montierten Zustand wasserdicht abschließt. Die Lichtscheibe 3 weist eine Umlenkoptik 13 auf, mittels derer das Licht der Leuchte 4 auf die Fahrbahn gelenkt wird.

Die Karosserieteile 6, 9 sowie die Öffnung 10 im Karosserieteil 9 weisen unvermeidliche Bauteiltoleranzen auf. Eine weitere zu beachtende Bautoleranz wird durch die Verbindung zwischen den Karosserieteilen 6 und 9 hervorgerufen. Zur Montage der Beleuchtungseinrichtung 1 wird zuerst das Trägerteil 2 durch die Öffnung 10 geführt und mittels des Befestigungsmittels 5 mit dem Karosserieteil 6 verbunden. Anschließend wird die Lichtscheibe 3 mit umliegendem Dichtungsgummi 12 in die Öffnung 10 eingerastet. Bezüglich der Verbindung Karosserieteil 9, Dichtungsgummi 12 und Lichtscheibe 3 sind deren eigene Toleranzen relevant, wohingegen die Toleranzen des Karosserieteils 6 und der Verbindung zwischen den Karosserieteilen 6, 9 keine Rolle spielen. Da aber die Lichtscheibe 3 materialbedingt verformungsfähiger als das Trägerteil 2 beziehungsweise die Verbindung zwischen Trägerteil 2 und Karosserieteil 6 ist, können diese Toleranzen leicht ausgeglichen werden, so daß ein kontrollierter Druck auf den Dichtungsgummi 12 ausgeübt wird. Daher kann das Spaltmaß zwischen Lichtscheibe 3 und Karosserieteil 9 kleiner gewählt werden, ohne die Dichtwirkung durch zu starkes Quetschen des Dichtungsgummis 12 zu gefährden. Die Toleranzen von Karosserieteil 6 beziehungsweise der Verbindung zwischen den Karosserieteilen 6, 9 schlägt sich nur im Abstrahlverhalten der Leuchte 4 zur Lichtscheibe 3 nieder, was jedoch vernachlässigbar ist. Bei Bedarf kann jedoch vorgesehen sein, daß das Trägerteil 2 grob zur Öffnung 10 ausrichtbar ausgebildet ist, beispielsweise mittels einer verstellbaren Rastverbindung.

## Patentansprüche

1. Beleuchtungseinrichtung für Kraftfahrzeuge zur Anordnung innerhalb einer eine Öffnung aufweisenden Karosserie oder dergleichen, umfassend ein mindestens eine Leuchte aufnehmendes Trägerteil, wobei das Trägerteil mit Befestigungsmitteln ausgebildet ist, mittels derer das Trägerteil an einem inneren Karosserieteil befestigbar ist, und einen transparente Lichtscheibe, mittels derer die Öffnung der Karosserie dichtend abschließbar ist,
**dadurch gekennzeichnet, daß**
das Trägerteil (2) und die Lichtscheibe (3) als separate Bauteile ausgebildet sind, die weder direkt noch über ein Verbindungsstück im eingebauten Zustand miteinander verbunden sind.

2. Beleuchtungseinrichtung nach Anspruch 1, dadurch gekennzeichnet, daß das Trägerteil (2) mittels einer Rastverbindung mit der Karosserie (6) verbindbar ist.

3. Beleuchtungseinrichtung nach Anspruch 1 oder 2, dadurch gekennzeichnet, daß in Abstrahlrichtung der Leuchte (4) eine Umlenkoptik angeordnet ist, in deren Ausgangsstrahlengang die Lichtscheibe (3) angeordnet ist.

4. Beleuchtungseinrichtung nach einem der Ansprüche 1 bis 3, dadurch gekennzeichnet, daß die Lichtscheibe (3) mit einer Optik (13) zur Umlenkung des Lichts ausgebildet ist.

5. Beleuchtungseinrichtung nach einem der vorangegangenen Ansprüche, dadurch gekennzeichnet, daß am Trägerteil (2) eine weitere Lichtscheibe (7) mit einer Fresnel-Streuoptik (8) angeordnet ist.

6. Beleuchtungseinrichtung nach einem der vorangegangenen Ansprüche, dadurch gekennzeichnet, daß die Lichtscheibe (3) in einem Kunststoffstoßfänger angeordnet ist.

7. Beleuchtungseinrichtung nach Anspruch 6, dadurch gekennzeichnet, daß der Stoßfänger aus EPDM besteht.

8. Beleuchtungseinrichtung nach einem der vorangegangenen Ansprüche, dadurch gekennzeichnet, daß die Leuchten (4) als Wedge-Base-Leuchten ausgebildet sind.
